# EUROPEAN PATENT APPLICATION

(11) **EP 1 134 679 A2**
(43) Date of publication of application: **19.09.2001**
(21) Application number: 01106244.5
(22) Date of filing: 14.03.2001
(51) Int. Cl.: G06F 17/60

(54) **Real time tax indicia system**

(30) Priority: 15.03.2000 US 189565 P
(71) Applicant: BIOCENTRIC SOLUTIONS, INC., Madison, Wisconsin 53717 (US)
(72) Inventor: Janiak, Martin J., Middleton, Massachusetts 01949 (US); Klumpp, Robert J., Albuquerque, New Mexico 87109 (US)
(74) Representative: Kador & Partner

(57) **Abstract**

A system for distribution tracking and tax assessment of distributed taxable products, such as cigarettes or liquor, is disclosed. The invention includes marking a product package, a product carton and a product case with an identifying indicia which may be laser coded onto the package. The identifying indicia is then tracked through a distribution chain for the product. Specific product location information is generated along the distribution chain as a result of the tracking process. The product location information may be made available to a taxing authority such that a tax assessment may be made on the product. A determination of the tax payable on the product based upon the product location information associated with the identifying indicia specific to the product may be made. In this manner, a specific product package, for example a cigarette pack, may be specifically identified through its distribution chain and appropriate tax assessed based upon the specific product's travel through the distribution process. The product location information may be obtained electronically throughout the distribution chain.

## Description

### BACKGROUND OF THE INVENTION

The present invention relates generally to distribution tracking and tax assessment of distributed products, and more particularly to a system for tracking of a product through its distribution chain, and assessing taxes payable on the product based on information developed through the distribution chain for the product.

The present method of applying tax indicia is very old and labor intensive. In the tobacco products industry, for example, in order to assess the tax on individual packs of cigarettes, individual taxing authorities must either audit distributor activities or sell stamps ("tax stamps") which are applied to each pack of cigarettes. Tax stamps are purchased by individual states from a single U.S. supplier. The stamps are then resold to local distributors who apply the stamps to individual packages of cigarettes. The stamps are extremely valuable and must be safeguarded at all times. The application of the stamps involves opening cases of cigarettes, removing cartons from the cases, opening the cartons and applying the stamps onto the bottoms of each individual cigarette package. This process is either performed manually or by machine, which can be troublesome to operate and maintain.

There are several disadvantages to this approach. States are concerned that only a single source exists for US tax stamps. Should that source become unable to deliver the tax stamps, the entire taxing process would break down. The states also incur significant costs due to the purchase and distribution of the stamps. Significantly, tax revenues to states with high tobacco taxes are lost due to the illegal diversion of products from low tax states. Tax stamp counterfeiting has become a sophisticated process with tax-evading efforts abounding around the world. Additionally, products sold at discount in foreign distribution are diverted back into the country of origin. These products, if designated for domestic consumption, would normally be sold with a tax, and therefore are sold at discount prices that avoid the domestic tax. Grey market distribution and black market distribution further deplete the amount of revenue from the taxing of the products.

Moreover, the tax stamps are not necessarily uniform. Every state has its own tax stamp designs, and most states require several different stamps depending upon the retail outlet and cigarette count per pack. As a result, the efforts associated with the application of the tax stamp are born by the product (tobacco, liquor) distributors. Also, the application of the tax stamps is a labor intensive and costly process. If these costs are reimbursed by the states, a further revenue drain on the tax income derived from the products occurs.

Another problem associated with the assessing of taxes on distributed products is the inability to quickly determine where in a distribution chain a product currently is, and compare the current location against where a product should be during the route to its final destination point. Additionally, it would be advantageous to be able to determine from where a particular case, carton or pack of products (such as cigarettes) originated, as well as its distribution history with respect to that individual product. In this way, it could be determined where a product belongs if it is not in the proper point in the distribution channel and whether the product is in the correct quantity.

Therefore, it would desirable to have a system for tracking a product through the distribution process and permitting the assessment of applicable taxes for the product that solves the aforementioned problems.

### SUMMARY OF THE INVENTION

One advantage of the present invention is that it eliminates the manufacture, handling and application of applied tax stamps. Significant cost savings can be realized by the states as a result. Another advantage is that tax stamp counterfeiting becomes more difficult. Product packages are marked with codes during manufacturing that, if removed or altered, will noticeably deface the package. Another advantage is that tobacco manufacturers will have a simple method of insuring that packages on domestic store shelves have been manufactured for that domestic market. Another advantage is that distributors will no longer be burdened by applying tax stamps to each package of products in their warehouses. Finally, this system may be phases in over time, so it will be able to run concurrently with the existing tax system as it is implemented.

The present invention provides a tax assessment system that overcomes the aforementioned problems, and allows individual products to be tracked and taxed based upon the individual product's process through its own distribution chain.

In accordance with one aspect of the invention, a method of distribution tracking and tax assessment of a distributed taxable product is disclosed. The method includes providing a product for distribution through a distribution chain, and tracking the product through at least a portion of the distribution chain to determine product location information along the distribution chain. The product location information is made available (such as to a taxing authority) such that a tax assessment may be made upon the product. Additionally, the method includes marking a product with an identifying indicia to be tracked through the distribution chain such that the product location information may be associated with the identifying indicia of the product.

In accordance with another aspect of the invention, a method of tracking a product in a distribution process for tax assessment purposes is disclosed. The method includes coding the product with a readable product identifier prior to or during the distribution process, and entering the product identifier into a tracking database. The product identifier is associated with a product destination, and the product identifier is read at at least one desired location during the distribution process. The method includes transmitting the location of the product by sending the product identifier to the tracking database to create a product distribution path history. The information about the product from the tracking database is provided to at least one interested party.

In accordance with another aspect of the invention, a tracking system is disclosed that includes a central tracking database, a production area for: producing a product, packaging the product into product cartons, applying a product identifying indicia, packaging the product cartons into product cases, and coding the product cases with an identifying indicia. The tracking system includes a factory database for receiving and transmitting data related to the product, the product carton and the product case. A storage facility is connected to the factory database, and a warehouse facility may be connected to the central tracking database. The distribution facility is also connected to the central tracking database. At least one reader is connected to the central tracking database such that the product cases may be monitored at the production area, the storage facility, the warehouse facility, or the distribution facility to determine a product case location.

Various other features, objects and advantages of the present invention will be made apparent from the following detailed description and the drawings.

### BRIEF DESCRIPTION OF THE DRAWINGS

The drawings illustrate one embodiment presently contemplated for carrying out the invention.

In the drawings:
Fig. 1 is a flow chart illustrating an overview of the distribution tracking of the product in accordance with one aspect of the present invention;
Fig. 2 is an enlarged view of the production area section of Fig. 1;
Fig. 3 is an enlarged view of the factory database management and reporting system section of Fig. 1;
Fig. 4 is an enlarged view of the factory loading dock section of Fig. 1;
Fig. 5 is an enlarged view of the factory cold storage section of Fig. 1;
Fig. 6 is an enlarged view of the warehouse section of Fig. 1;
Fig. 7 is an enlarged view of the distributor section of Fig. 1;
Fig. 8 is an enlarged view of the state tax administration section of Fig. 1;
Fig. 9 shows a product coding system used in one aspect of the present invention;
Fig. 10 shows a marking aperture used in one aspect of the present invention; and
Fig. 11 shows another product coding system used in one aspect of the present invention.

### DETAILED DESCRIPTION OF THE DRAWINGS

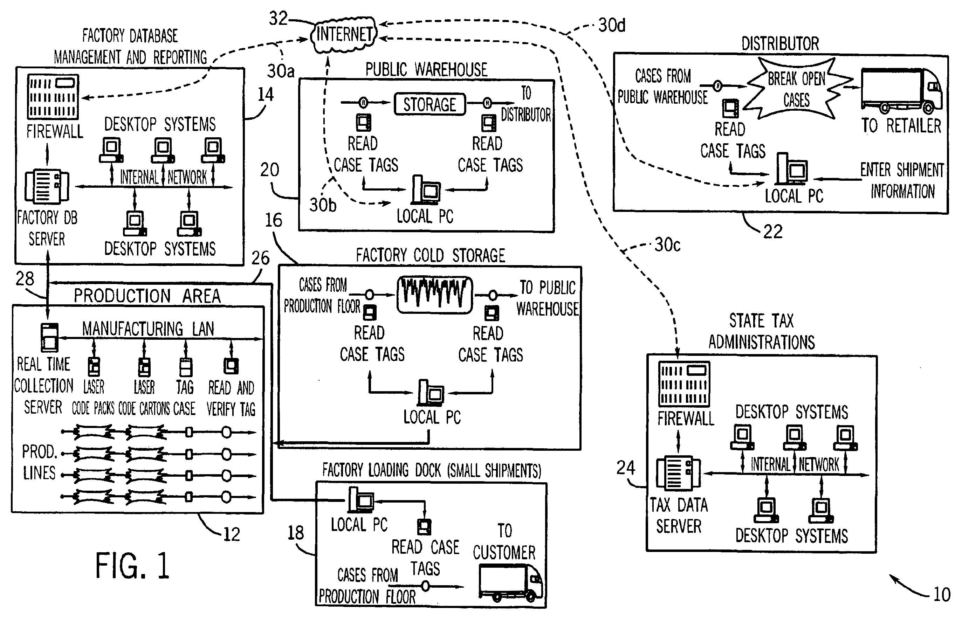

Referring to Figure 1, the distribution tracking and tax indicia system is show generally by the numeral 10. System 10 is part of a T³ initiative, or tag, track and trace initiative, for a particular distributed product. Although system 10 is particularly applicable to tobacco products, and cigarettes in particular, it may also be useful for such taxable products as liquor and other alcoholic beverages. Additionally, the present invention contemplates solutions for brand protection involving the present system, including holograms for officially licensed merchandise, and marking of paper currencies and official documents such as passports. The present invention contemplates a variety of products through many different types of systems and distribution methodologies, and Figure 1 is representative of a preferred distribution system for such products as cigarettes, for example. System 10 includes a production area 12 in association with a factory database management and reporting system 14. During the distribution process, product requiring cold storage moves from production area 12 to factory cold storage 16, although it is contemplated that the present invention may be used where the products are not necessarily temperature regulated. Some product which may be destined for small shipments, may be directly distributed from the factory and are directed to the factory loading dock 18 for direct shipment to the customer. Alternatively, product from factory cold storage 16 may be sent to public warehouse 20, where the product is stored until shipped to distributor 22 for distribution to retailers. This activity is preferably monitored by and/or reported to state tax administrations 24 within system 10. Components of the system 10 may communicate in a communications network with one another via a direct connection such as 26 or 28 or through connections 30 A-D to the internet 32 or other central database.

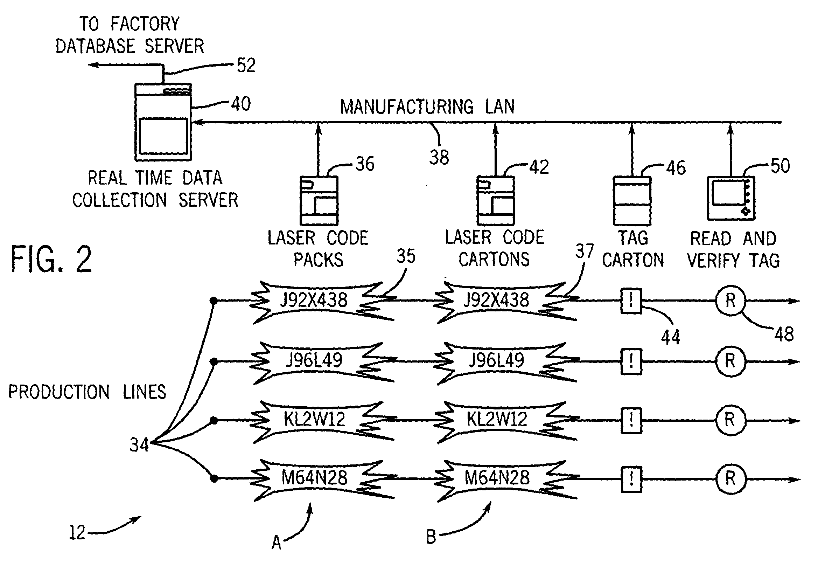

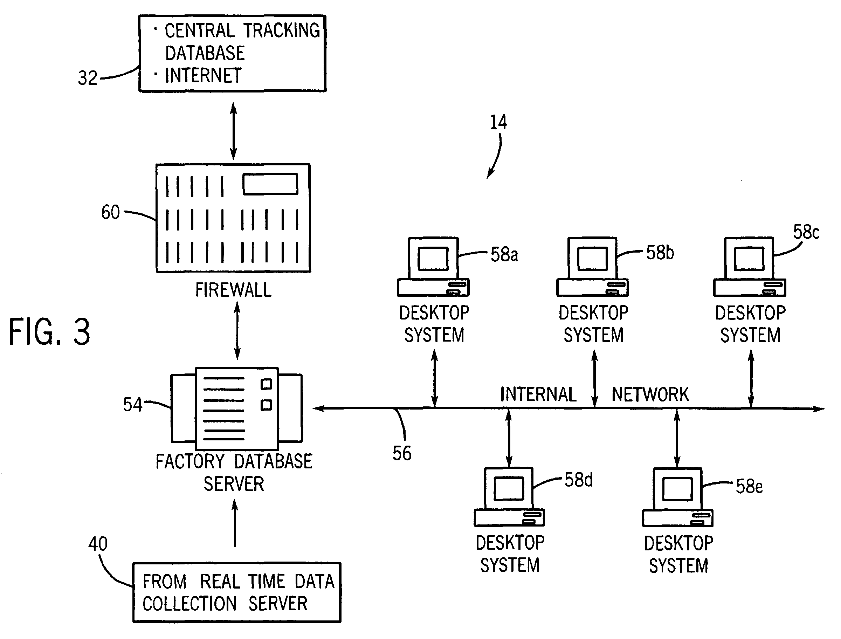

Referring to Figure 2, an enlarged view of an example of a production area associated with the present invention is shown. The product of interest, for example cigarettes, is produced in production lines 34. Four production lines are shown, but it is understood that any number of production lines may be appropriate and the current number of production lines are for illustration purposes only. During the production process, at point A, individual packs of the product are applied with an individual identifying indicia such as a laser code or other mark. This mark or product identifying indicia is applied by a laser coding apparatus 36. Specific information relating to the package identifying indicia are transmitted via a manufacturing local access network (or LAN) 38, where the individual identifying indicia are collected and stored in a real time data collection server 40. At point B in the production process, a carton identifying indicia, such as 37, similar to package identifying indicia 35, is coded onto a product carton by carton identifying indicia laser coding device 42. In a similar manner, information from laser coding device 42 is fed via the local network 38 to real time data collection server 40. Codes 35 and 37 may be a readable code, such as an alpha-numeric serial number, or it may include a combination of both overt and covert markings, including invisible inks, magnetic inks that includes trace elements and ultraviolet inks to provide a combination of both visible and covertly visible marks. Additionally, between point A and point B, it is preferred and contemplated that a clear over-wrap such as a cellophane wrap over a cigarette package, would be applied over the individual package in the production line 34, such that tampering of the mark would require removal of the over-wrap and would change code 35. Imbedded within code 35 or 37 may be any or all of the following information including the cigarette manufacturer, the brand of cigarette, the production line where the cigarette pack was produced, the date of production, an incrementing number for each carton produced in the production run or any additional information desired to be included in such a code. In a preferred embodiment, a computing system located within the cigarette production area will inform laser code 36 with the initial code to be printed in any given production run. The production line will be synchronized with the laser coder 36 in such a way as to insure that in a carton containing ten cigarette packs, all ten packs contain the same serial number. This number would then be incremented for the next ten packs in the next cigarette carton. An alternate to the laser codes 35 or 37 would be a coded label, that may be attached to each carton and/or case, such as a radio frequency identification tag, RFID tag 44. The RFID tag 44 would be attached with RFID labeler 46, which is connected into LAN 38. Other identifying methods may be employed such that the case which houses the cartons containing the packs has a case identifying indicia for quick verification. The current invention contemplates within production lines 34 to read and verify the tag 48 with reader 50 such that the real time data collection server 40 has a record of case identifying indicia, carton identifying indicia and pack identifying indicia as well as time of production and production line information. Information collected from the data collection server is sent via line 52 to factory database server (54 of Fig. 3).

Figure 3 illustrates a factory database management and reporting system as part of the present invention. Factory database server 54 receives information from the production area of Figure 2, as well as other portions of the factory. The factory database server is linked to internal network 56 to desktop systems such as 58 a-e, for example.

Desktop systems 58 a-e may include any information relevant to the product for use by the factory. Information is collected from the real time data collection server 40 to the internal network 56 via factory database server 54. Factory database server 54 is separated by firewall 60 to a central tracking database or internet connection 32 such that information may be sent via the internet 32 to other portions of the distribution chain, but may prevent unauthorized access of information of factory database server 54.

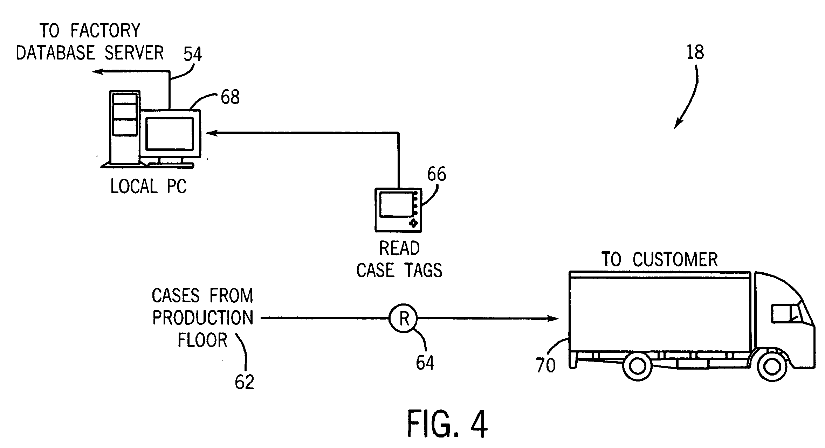

Referring to Figure 4, factory-loading dock 18 portion of the product tracking system is shown for situations where small shipments are appropriate. In such circumstances, such as in step 62, product cases come from the production area (12 of Fig. 2) and at the factory loading dock the cases are read 64 by reading the case tags or other case identifying indicia which have been applied to the product cases. Information from the product case tag reader 66 is transmitted to a local PC 68, which sends the information to factory database server 54 such that the specific product case identifying indicia, time stamp and destination, for example, may be transmitted to the factory database server 54. Cases then maybe shipped 70 to customers that are designated to receive shipments directly from the factory. Under the present invention, it is known exactly which product cases based on reading 64 are loaded and shipped to specific customers and when.

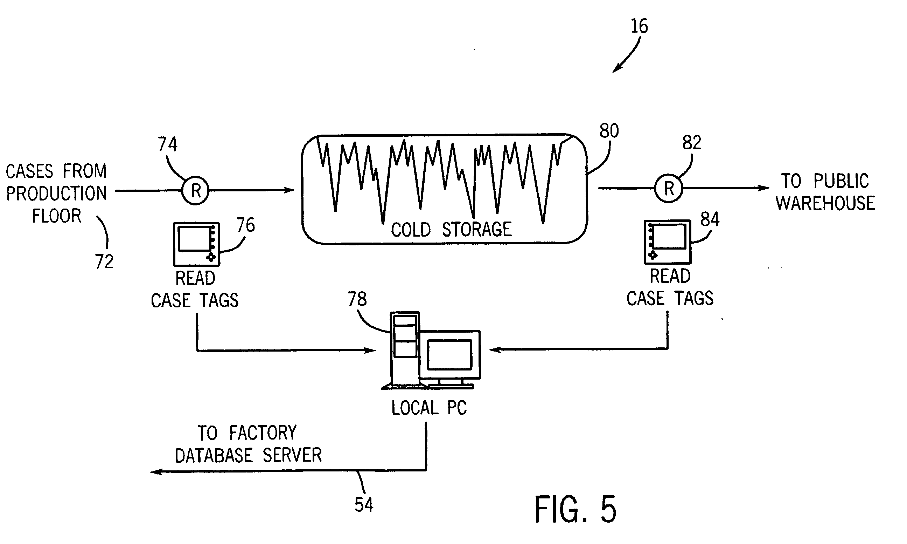

Referring to Figure 5, an alternate distribution procedure is demonstrated which may be utilized in cases where factory cold storage 16 is desired. Again, cases going through this part of the distribution chain arrive from the production floor 72 and cases are read 74 and information read by the case tag reader 76 is transmitted to a local PC 78. The product is then moved into cold storage 80 until it is desired to be moved. When it is desired to move the product cases, it is removed from cold storage 80 and again read 82 and that information may be transferred from the case tag reader 84 to the local PC 78. In this manner, both the product cases incoming and outgoing are recorded at readings 74 and 72, thereby keeping track of the time of entry and exit from the cold storage 80 area. This information is transmitted via local PC 78 to the factory database server 54.

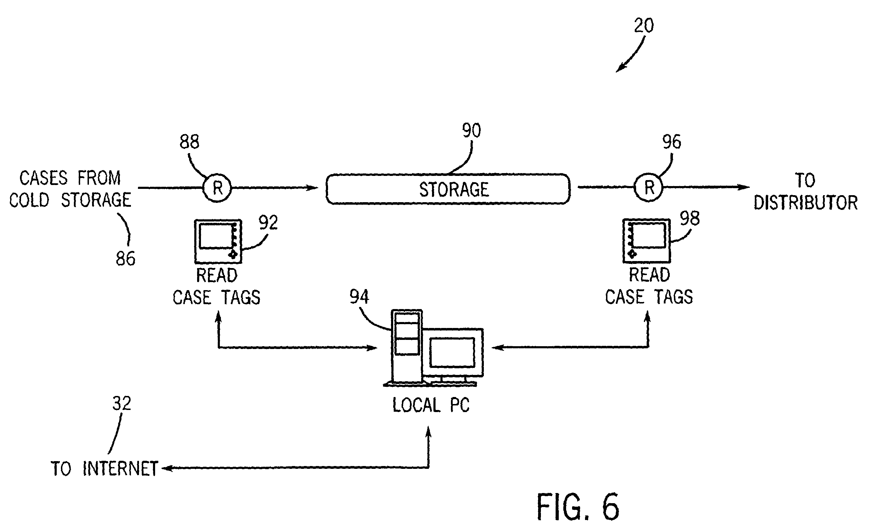

Referring to Figure 6, public warehouse 20 is shown as part of the distribution chain. In 86, product cases are removed from cold storage and read 88 prior to entering storage 90. Information read by the product case reader 92 at reading step 88 is transmitted to local PC 94. When it is desired to move the product cases from storage 90, the product cases are read 96. Information from the reading step 96 is transmitted from the product case reader 98 to local PC 94. In this manner, the question of which product cases have been stored in storage 90 and when they entered and exited can be determined by readings 88 and 96. Information from local PC 94 can be transmitted to central tracking database or internet server 32. The product cases are then brought from the public warehouse storage 20, following reading 96, to a distributor.

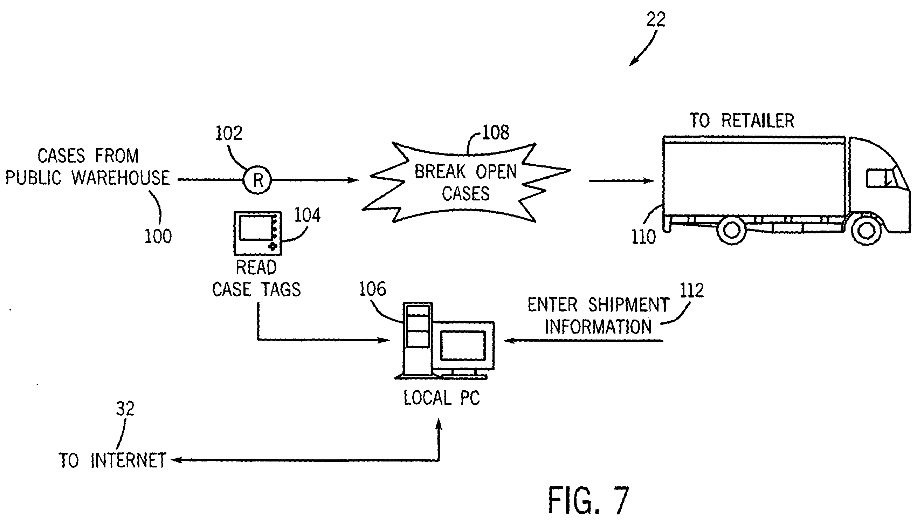

Referring to Figure 7, distributor section 22 is shown. Product cases are brought 100 from the public warehouse (20 of Fig. 6) and are read 102. Information from reading 102 is transmitted from the product case reader 104 to local PC 106 at the distributor. The distributor breaks open cases 108 into individual smaller portions, such as product cartons, to be distributed to individual retailers 110. Additionally, the shipment information is entered 112 into local PC 106 such that it can be determine which cases and cartons were sent to which retailers and at what time. Local PC 106, again, transmits its information to central database server or Internet connection 32 such that the information can be transmitted and communicated.

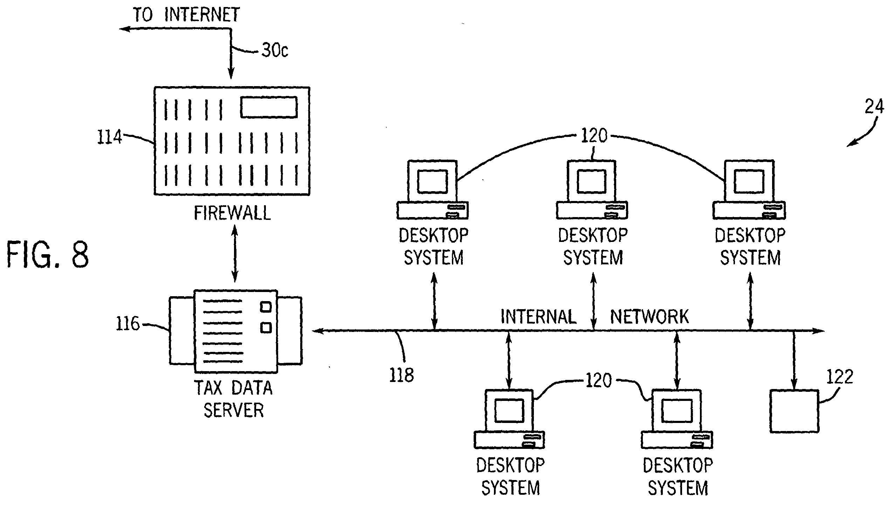

Referring to Fig. 8, a state tax administration 24 is shown. One of the advantages of the above system is that via Internet connection 30c, information from the other portions of the distribution chain may be submitted or otherwise made available to the appropriate state taxing administration. In a preferred embodiment, the product data information obtained from the different product case readers throughout the distribution chain, as submitted by the local PCs, and after passing through firewall 114, reaches tax data server 116. Tax data server 116 is connected to an internal network 118 of the state tax administration through which individual desktop systems or PCs120. Additionally, connected to internal network 118 may be a port 122 for connection to a portable digital assistant or other infield data gathering device by field agents associated with the tax administration. In this manner, data from throughout the distribution chain specific to the product cases, which identify a particular product carton and product package, may reach the internal network 118 of the state tax administration both by the product case readings along the distribution chain, by spot checks by state tax administration personal, or information received at the state tax information.

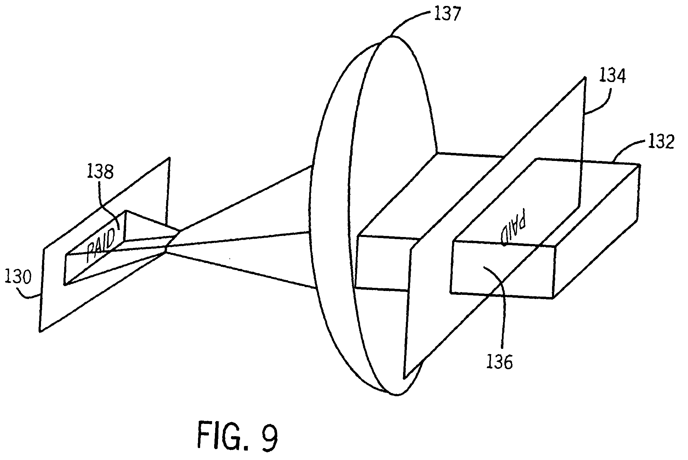

Referring, now to Fig. 9, a methodology for marking a package 130, such as a package of cigarettes or a liquor label. This methodology is commonly referred to as Pulsed CO₂ Laser Marking. Such a marking would be placed on package 130 prior to applying any clear package overwrap. The illustrated method of coding package 130 includes generating a laser beam 132. Laser beam 132 is generated by a laser beam generator (not shown). The laser beam 132 is passed through a stencil 134. Stencil 134 includes a stencil pattern 136. Stencil 136 in the present figure is labeled PAID, but may be any stencil pattern representative of a desired code and/or pattern to be marked onto package 130. Stencil 134 may be constructed of any suitable material, however, a metal stencil is preferred. Stencil 134 acts as a mask in blocking those portions of laser beam 132, except for those portions of laser beam 132 which are allowed to pass through the stencil pattern 136. Therefore, at least a portion of the laser beam is allowed to pass through the stencil pattern 136. The following passage through the stencil 134, enters and passes through a lens 137 which is an operational association with the mask to receive laser beam 132. Lens 137 focuses the laser beam 132 onto the package 130 to project the desired stencil pattern 136 or other identifying indicia onto package 130. The result is a laser mark 138 that is coded upon package 130 having the same mark as stencil pattern 136 on stencil 134. Preferably, a mark is made on package 130 with a single pulse of laser 132.

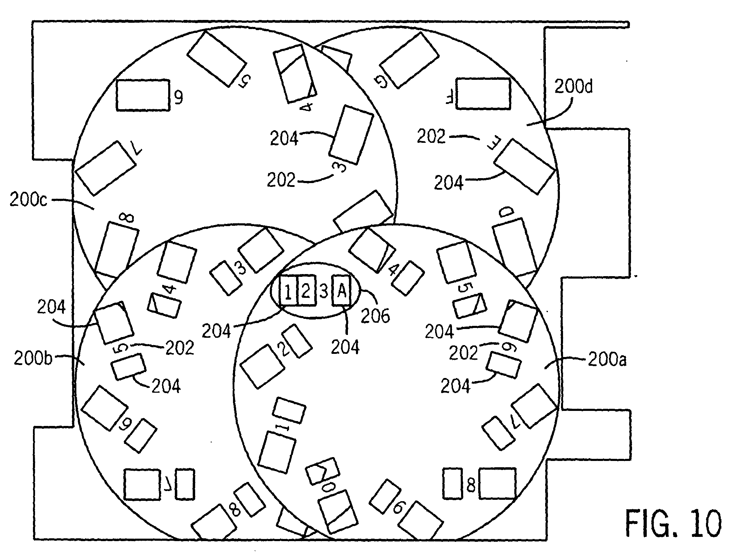

Referring now to Fig. 10, an automatic code changing system is shown for providing changing stencils to be used, for example, in the apparatus of Fig. 9. The automatic code changing stencil, in one embodiment, would be a set of overlapping disks 200A through D. Each disk 200A through D includes a stencil portion 202 representative of a portion of identifying indicia, for example, characters and/or numerals or other symbols, as well as apertures 204 positioned next to the stenciled portion 202 to allow other stenciled portions from other disks to show therethrough. For example, in stencil 206 visible on disk 200A, a combination of three numbers and one letter are visible. The number 1 from disk 200C and the number 2 on disk 200B are visible through aperture 204 on disk 200A. Stenciled portion representative of the number 3 is already found on 200A and finally the number A from disk 200D is visible through aperture 204 of stencil 206. The result is that the stencil 123A represents a code to be stenciled onto a product package. More disks could be arranged such that they create a complete code where they overlap, with each disk etched with an array of characters representing a portion of the code. Each of the disks would be driven by a motor (not shown) that is controlled by a computing device that correctly positions each disk to present the desired code characters to the laser beam. In operation, a packaging machine would communicate with the laser generator that a package (for example a cigarette pack) is ready to be marked. The laser would fire once to place a code (such as 123A) on the pack. The machine would then place another pack in position and the laser would mark the next pack, and so on. After each 10 packs were marked, and in synchronization with the machine that placed the cigarette packs into cartons, the serial number portion of the code would change. By rotating each of the disks to a desired location, a new stencil representative of a new code would be available for the laser to pass through.

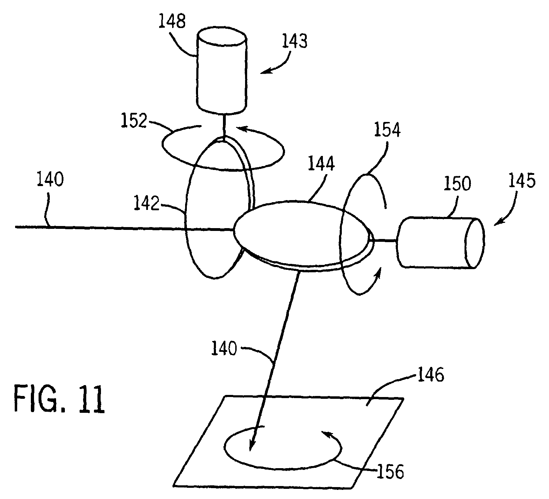

Referring now to Fig. 11, an alternate method of marking a code for other desired identifying indicia onto a package, carton or case is shown. This method is sometimes referred to as a beam-steered laser coding technology. Within this method, a laser beam 140, which is generated by a laser beam generator (not shown) is delivered onto mirrors 142 and 144 where laser beam 140 is reflected from mirror 142 to mirror 144 and reflected onto surface 146. Each of the mirrors 142 and 144 is controlled by a galvanometer 143 and 145, which includes rotating cylinders 148 and 150. When rotated, such as indicated by arrows 152 and 154, by way of example, the direction of mirrors 142 and 144 can be adjusted. The result is that the angular position of the mirrors may be controlled to effect a path such as 156 on surface 146. The laser beam 140 may be turned on and off while the beam is moved over the surface 146 in such a fashion that characters are produced on surface 146. In this manner, an identifying indicia or other code may be marked onto surface 146, such as a package of cigarettes or other package. Other marking methods may be used including removing top layers to reveal contrast layers or changing the color of a surface layer to make a desired mark.

The present invention has been described in terms of the preferred embodiment, and it is recognized that equivalents, alternatives, and modifications, aside from those expressly stated, are possible and within the scope of the claims.

For example, where local PCs are indicated throughout, it is contemplated that any information storage and transfer device, such as handheld units, palm units, laptops, cellular phones, mobile computers, or scanning units, etc. may be used. Additionally, although a particular distribution chain is described, any distribution chain appropriate for a taxable product is contemplated by the present invention.

## Claims

1. A method of providing taxable product information comprising:
providing a product for distribution through a distribution chain;
tracking the product through at least a portion of the distribution chain to determine product location information along the distribution chain; and
making the product location information available such that a tax assessment may be made on the product.

2. The method of Claim 1 further comprising the step of marking the product with an identifying indicia to be tracked in the tracking step such that the product location information may be associated with the identifying indicia of the product.

3. The method of Claim 2 further comprising the step of determining the tax payable on the product based on the product location information associated with the identifying indicia.

4. A method of tracking a product in a distribution process for tax assessment purposes comprising the steps of:
coding the product with a readable product identifier prior to or during the distribution process;
entering the product identifier into a tracking database;
associating the product identifier with a product destination;
reading the product identifier at at least one desired location during the distribution process;
transmitting the location of the product by sending the product identifier to the tracking database to create a product distribution path history; and
providing the product distribution path history from the tracking database to at least one interested party.

5. The method of Claim 4 wherein the coding is performed with a laser.

6. The method of Claim 4 wherein the coding of the product occurs during packaging of the product.

7. The method of Claim 4 wherein the product identifier is unique.

8. The method of Claim 4 wherein the product identifier is semi-unique.

9. The method of Claim 4 wherein the product is cigarettes.

10. The method of Claim 4 wherein the product is alcoholic beverages.

11. The method of Claim 4 further including the step of paying taxes associated with the product based upon the product distribution path history in the tracking database.

12. The method of Claim 4 wherein at least one of the interested parties is a taxing authority.

13. The method of Claim 4 further including the steps of packaging the product into cartons and coding the cartons with a carton identifier, and wherein the carton identifier is tracked in the tracking database.

14. The method of Claim 4 further including the steps of packaging the product in a case and coding the case with the case identifier, and wherein the case identifier is tracked by the tracking database.

15. A method of assessing a tax on a product comprising:
establishing a communications network between a product distribution network and a taxing authority for the product;
laser coding each product with a laser code having associated product information at a product manufacturer in the product distribution network;
reading the laser code as the product travels through the product distribution network;
tracking the product through the communications network as a result of the reading step;
transmitting the product information via the communications network to the taxing authority; and
automatically assessing tax associates with the tracked products based on the information from the reading of the laser code.

16. The method of tracking a package product comprising:
providing a product having a package therefore;
marking the package with a package identifying indicia;
packing a plurality of packages into a carton;
marking the carton with a carton identifying indicia;
packing a plurality of cartons into a case;
marking the case with a case identifying indicia; and
tracking the case identifying indicia throughout a distribution chain for the product, by reading the case identifying indicia along the distribution channel, such that the information related to the case identifying indicia, carton identifying indicia and the package identifying indicia maybe transmitted to a central database.

17. The method of Claim 16 further including a step of applying a transparent wrapper on the package to cover the package identifying indicia.

18. The method of Claim 16, wherein the case identifying indicia is a radio frequency identification (RFID) tag.

19. The method of Claim 16, wherein at least one of the marking steps is performed with an ink jet marking apparatus.

20. The method of Claim 16, wherein at least one of the marking steps is performed with a laser.

21. The method of Claim 20, wherein the laser is a pulsed CO₂ laser.

22. The method of Claim 20, wherein the laser is a beam-steered laser.

23. A method of product tracking comprising the steps of:
providing a product having a package, a prior carton for holding a plurality of packages, and a product case for holding a plurality of product cartons;
marking at least one of the product packages, product cartons and product cases with an identifying indicia.;
tracking the product case through at least a portion of a product distribution system; and
generating information related to the product package for an assessment of taxes on the product package based on the tracking of the identifying indicia.

24. A tracking system comprising:
a central tracking database;
a production area for producing a product, for packaging the product into product cartons and applying a product identifying indicia, and packaging product cartons into product cases and coding the product cases with an identifying indicia;
a factory database for receiving and transmitting data related to the product, the product carton and the product case;
a storage facility connected to the factory database;
a warehouse facility connected to the central tracking database;
a distribution facility connected to the central tracking database; and
at least one reader connected to the central tracking database such that the product cases maybe monitored at the production area, the storage facility, the warehouse facility, or the distribution facility to maintain a position and content of the product case.

25. The system of Claim 24, further including a tax administration facility connected to the central tracking database for receiving information leading to the product cases for generating information relating to an assessment of taxes on the product package based on the tracking of the product case.

26. The system of Claim 24 where the central tracking database is connected to the factory database and is accessible through the internet.

27. A laser marking system for marking a package comprising:
a laser beam generator for generating a laser beam;
a mask having a stencil pattern representative of a desired identifying indicia, the mask receptive to the laser beam and capable of passing a laser beam through the stencil pattern;
a lens in operational association with the mask to receive the laser beam and focus the laser beam onto the package to project the desired identifying indicia thereon.

28. A method of making a package comprising:
generating a laser beam;
passing the laser beam through a mask having a stencil pattern representative of a desired identifying indicia, the mask receptive to the laser beam and capable of passing the laser beam through the stencil pattern;
focusing the laser beam with a lens onto the package; and
marking the package with the laser beam to generate the desired identifying indicia on the package.

29. The method of Claim 28, wherein the marking step includes a removing a surface layer of the package to reveal a contrast layer below the surface layer.

30. The method of Claim 28, further including the step of modifying a surface layer of the package causing a color change in the surface layer of the package.

31. The method of Claim 28, further including the steps of:
providing a plurality of stencil patterns each having an identifying indicia; and
changing the masks to receive the laser beam such that the laser beam passing through the stencil pattern may provide a plurality of identifying indicia, thereby allowing the laser beam to mark the package with one of the plurality of identifying indicia; and
projecting one of the plurality of identifying indicia on to the package.

32. The method of Claim 28, further including the steps of:
providing a plurality of overlapping disks, each disk having a plurality of characters representative of a portion of an identifying indicia; and
positioning the overlapping disks such that at least one of the characters from each disk aligns to form a complete stencil pattern having a unique identifying indicia to receive the laser beam therethrough.

33. An identifying indicia code changing system comprising:
a plurality of disks, each disk having a plurality of characters representative of a portion of an identifying indicia such that when the disks are at least partially overlapped, one of the characters from each disk aligns to perform a complete stencil pattern having a unique identifying indicia;
a pair of computer controlled mirrors; and
a galvanometer attached to each of the mirrors to control a path of the laser beam to be reflected by the pair of mirrors.
